(19) **Europäisches Patentamt / European Patent Office / Office européen des brevets**

(11) **EP 4 196 844 B1**

(12) # FASCICULE DE BREVET EUROPEEN

(45) Date de publication et mention de la délivrance du brevet:
**07.08.2024 Bulletin 2024/32**

(21) Numéro de dépôt: **21762001.2**

(22) Date de dépôt: **06.08.2021**

(51) Classification Internationale des Brevets (IPC):
**G02B 27/48** *(2006.01)* **G02B 27/09** *(2006.01)*

(52) Classification Coopérative des Brevets (CPC):
**G02B 27/48; G02B 27/0927; G02B 27/0944**

(86) Numéro de dépôt international:
**PCT/EP2021/072100**

(87) Numéro de publication internationale:
**WO 2022/033995 (17.02.2022 Gazette 2022/07)**

(54) **PROCÉDÉS ET SYSTÈMES POUR LA GÉNÉRATION D'IMPULSIONS LASER DE FORTE PUISSANCE CRÊTE**

METHODEN UND SYSTEME ZUR ERZEUGUNG VON LASERPULSEN HOHER SPITZENLEISTUNG

METHODS AND SYSTEMS FOR THE GENERATION OF LASER PULSES OF HIGH PEAK POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.08.2020 FR 2008512**

(43) Date de publication de la demande:
**21.06.2023 Bulletin 2023/25**

(73) Titulaire: **Imagine Optic**
**91400 Orsay (FR)**

(72) Inventeurs:
• **GORJU, Guillaume**
**91410 Dourdan (FR)**
• **LEVECQ, Xavier**
**91190 Gif sur Yvette (FR)**
• **AYEB, Adam**
**91400 Orsay (FR)**
• **BOUDRIES, Fahem**
**91300 Massy (FR)**

(74) Mandataire: **Osha BWB**
**2, rue de la Paix**
**75002 Paris (FR)**

(56) Documents cités:
**EP-A1- 1 450 199 WO-A1-2019/233899**
**WO-A2-2019/063662 US-A1- 2013 294 468**

## Description

## Domaine technique de l'invention

La présente description concerne des procédés et systèmes pour la génération d'impulsions laser de forte puissance crête destinées notamment au choc laser. La présente description trouve des applications par exemple dans le grenaillage laser, la spectroscopie par choc laser, la génération d'ultrasons par laser ou le nettoyage laser de composants.

## Etat de la technique

Les applications de traitement de surface par choc laser, c'est-à-dire avec formation de plasma, nécessitent des impulsions de très forte puissance crête, typiquement autour de 10 mégawatts (MW) ou davantage, c'est-à-dire typiquement des impulsions dont la durée est de l'ordre de quelques dizaines de nanosecondes ou moins et qui présentent des énergies de plus d'une centaine de millijoules. Ces impulsions, focalisées sur des zones de quelques mm$^2$ typiquement, permettent d'atteindre des densités d'énergie de l'ordre de dizaines de Joule par centimètre carré pour la formation des chocs laser. Ces applications comprennent par exemple la spectroscopie par choc laser, le nettoyage laser, la génération d'ultrasons par laser, par exemple pour l'analyse de la structure cristalline d'un matériau et le « grenaillage laser » (ou « *laser shockpeening* » selon l'expression anglo-saxonne) pour l'amélioration de la durée de vie et de la résistance mécanique de pièces.

Le grenaillage laser est décrit par exemple dans les brevets US 6002102 [réf. 1] et EP 1 528 645 [réf. 2]. Une première fine couche absorbante est déposée sur la pièce à traiter. En opération, les impulsions laser de fortes puissances crête vaporisent la couche absorbante ce qui génère un plasma chaud. L'expansion du plasma entraîne une onde de compression intense qui permet de générer des précontraintes en profondeur dans le matériau de la pièce à traiter. Une deuxième couche, dite couche de confinement, transparente au rayonnement, par exemple de l'eau ou un matériau transparent à la longueur du rayonnement incident, par exemple du Quartz, aide l'onde de choc à se détendre vers l'intérieur de la surface à traiter. Ce procédé, appelé « grenaillage laser » permet d'augmenter la résistance mécanique des pièces à la fatigue cyclique. Ce procédé est généralement réalisé en transportant le faisceau en espace libre jusqu'à la zone à traiter.

Le transport de faisceaux laser de fortes puissances en espace libre engendre cependant des problèmes de sécurité et rend très complexe l'accessibilité à des endroits confinés ou hostiles (milieux immergés par exemple).

Pour accéder à des surfaces localisées dans des milieux confinés ou hostiles, les fibres optiques semblent des outils bien adaptés. Néanmoins, certains des procédés précédemment décrits, comme le grenaillage laser ou le nettoyage laser de surface, s'effectuent généralement dans des environnements industriels poussiéreux et les seuils de dommages des surfaces d'entrée et de sortie des fibres s'en trouvent nettement diminués. Par ailleurs, en dehors des aspects de propreté, pour les lasers pulsés de durée d'impulsion inférieure à 1 $\mu$s, le niveau de puissance crête pouvant être injectée dans une fibre est limité par le seuil de dommage diélectrique du matériau constituant le coeur de la fibre. Ainsi, pour des impulsions de 10 ns à 1064 nm le seuil de dommage de l'interface air-silice est autour de 1 GW/cm$^2$.

Pour limiter les risques d'endommagement à l'injection et à la propagation, l'utilisation de guides d'onde avec des larges diamètres de coeur est préférée. Or les gros coeurs (typiquement supérieurs à 1 mm) sont peu flexibles et des courbures trop importantes créent des pertes par ondes évanescentes qui peuvent endommager la fibre.

Un ensemble de fibres optiques (ou « bundle ») peut être utilisé, comme décrit par exemple dans le brevet US6818854 [réf. 3]. Cependant, pour limiter les pertes à l'injection et à la propagation dans ce type de composant, il est préférable d'injecter l'énergie lumineuse dans chaque fibre individuellement, ce qui rend l'injection complexe et coûteuse ; par ailleurs, il est nécessaire de prévoir en sortie du composant un système optique de focalisation de forte ouverture, ce qui rend le système optique complexe, onéreux et encombrant.

Il y a donc un besoin pour la génération d'impulsions nanosecondes, de forte puissance crête, au moyen d'un système avec un dispositif fibré comprenant une fibre avec un coeur unique, et qui permette de repousser les seuils d'endommagement des fibres et améliorer la souplesse du dispositif fibré afin d'éviter sa détérioration optique par contraintes mécaniques.

Dans la demande de brevet WO2019233899 [réf. 4], la déposante a notamment proposé un système de génération d'impulsions laser de forte puissance crête comprenant une source lumineuse pour l'émission d'impulsions laser nanosecondes, un dispositif fibré pour le transport des impulsions laser comprenant une fibre multimode avec un coeur unique et un amplificateur optique agencé en sortie du dispositif fibré pour l'amplification optique des impulsions laser. Le système ainsi décrit permet de disposer de très fortes puissances crêtes pour les impulsions incidentes sur le matériau dans lequel on veut générer des chocs laser tout en sécurisant les interfaces d'entrée et de sortie du dispositif fibré. Il rend possible l'utilisation d'une fibre multimode de diamètre limité, typiquement inférieur à 1 mm, voire inférieur à 300 $\mu$m, ce qui confère une grande souplesse au dispositif fibré, et de ce fait un accès plus facile à des milieux confinés.

Dans la demande de brevet WO2019233900 [réf. 5], la déposante a également proposé un module de mise en forme temporelle des impulsions laser, agencé en amont du dispositif fibré, et configuré pour réduire la densité spectrale de puissance (DSP) par réduction de la cohérence temporelle des premières impulsions. La réduction de la DSP à énergie quasi constante ou avec une faible réduction de l'énergie permet de limiter les surintensités attribuées au « speckle » (également appelé « scintillement » ou « tavelures »), de sécuriser l'injection dans le dispositif fibré et de limiter les effets non linéaires. Comme dans la demande de brevet [réf. 4] précédemment décrite, l'utilisation d'une fibre multimode de petit diamètre est alors possible.

Dans les deux demandes de brevet [réf. 4] et [réf. 5] ci-dessus mentionnées, il est par ailleurs décrit la possibilité d'une mise en forme spatiale du faisceau pour uniformiser la densité spatiale de puissance des impulsions en entrée du dispositif fibré. L'uniformisation de la densité spatiale de puissance permet de limiter les surintensités dans la fibre liées à la distribution d'intensité gaussienne d'un faisceau par exemple. Ainsi, il est par exemple décrit un module de mise en forme spatiale des impulsions permettant de former des impulsions dont la répartition spatiale d'intensité est de type carré ou « *top hat* » selon l'expression anglosaxonne, c'est-à-dire avec une variation spatiale de l'intensité faible, typiquement limitée à +/- 10%. Une mise en forme spatiale de type top hat permet en outre d'adapter le faisceau lumineux formé par lesdites premières impulsions à la dimension du coeur de la fibre multimode.

Un tel module de mise en forme spatiale peut comprendre un élément optique diffractif (ou « DOE » selon l'expression anglo-saxonne « *Diffractive Optical Element* ») associé à un système optique, par exemple une lentille optique, pour réaliser une mise en forme spatiale adaptée à la taille et à la géométrie de la fibre optique multimode destinée au transport des impulsions nanosecondes. En pratique, la mise en forme spatiale du faisceau dans un plan de Fourier (par exemple le plan focal image) du système optique correspond à la transformée de Fourier spatiale du masque de phase imposé par le DOE convoluée avec la transformée de Fourier spatiale de la répartition spatiale d'intensité du faisceau au niveau du DOE. Ainsi, le masque de phase imposé par le DOE peut être calculé de telle sorte que le résultat de cette convolution forme une répartition d'intensité donnée au niveau de la face d'entrée de la fibre, par exemple une répartition d'intensité de type « top hat », le diamètre du faisceau au niveau de la face d'entrée de la fibre étant proportionnel à la distance focale du système optique. Le DOE associé à un système optique de type lentille optique s'avère donc particulièrement intéressant pour la mise en forme spatiale des impulsions nanosecondes dans le contexte du transport d'impulsions de forte puissance crête puisqu'en choisissant les paramètres du DOE, un faisceau laser, quelle que soit sa répartition spatiale en sortie de source, peut être injecté dans une fibre à coeur unique en respectant la taille du guide d'onde et son ouverture numérique.

Cependant, la déposante a mis en évidence l'apparition de surintensités ou « points chauds » liés à la présence d'un DOE, ces derniers pouvant favoriser un endommagement local de la surface d'entrée de la fibre dû à une densité lumineuse locale trop élevée. La déposante a montré notamment que les points chauds les plus intenses peuvent présenter une puissance crête jusqu'à 6 fois supérieure à la puissance moyenne d'une impulsion injectée dans la fibre.

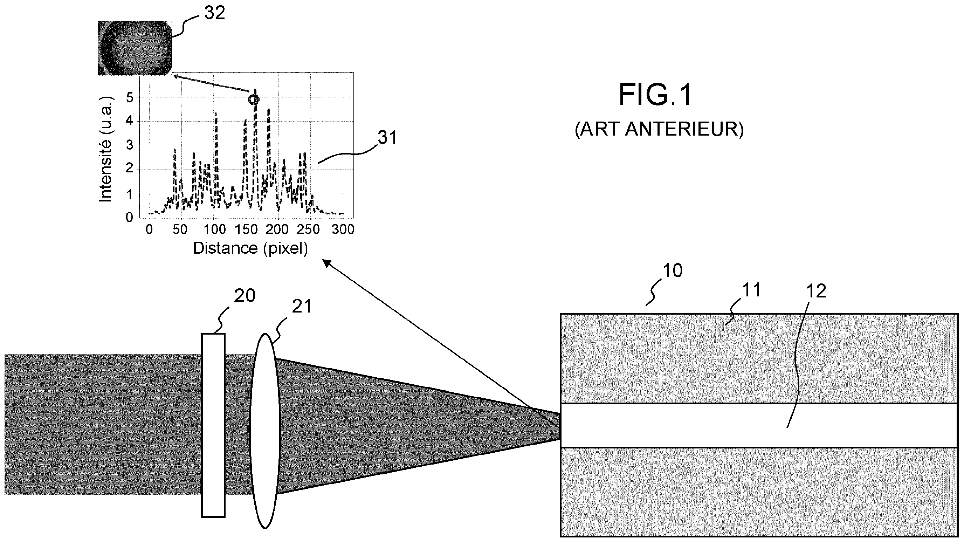

A titre d'exemple, la Fig. 1 illustre un module de mise en forme spatiale avec un élément optique diffractif 20 coopérant avec un système optique 21, par exemple une lentille optique, pour réaliser une mise en forme spatiale adaptée à la taille et à la géométrie d'une fibre optique multimode 10 destinée au transport des impulsions nanosecondes. La fibre optique multimode 10 comprend une gaine 11 et un coeur multimode 12. La courbe 31 représente un profil de la répartition spatiale d'intensité d'un faisceau formé desdites impulsions nanosecondes. Le profil de répartition spatiale d'intensité est mesuré dans un plan d'entrée de la fibre optique multimode 10, au moyen d'un détecteur (non représenté), en unités arbitraires (u.a.), selon un axe de mesure d'une surface de détection du détecteur passant par le centre du faisceau. En abscisse, la distance représente un nombre de pixels (ou détecteurs élémentaires) de la surface de détection, selon l'axe de mesure, à partir d'un point arbitraire référence « 0 » situé en dehors du faisceau. L'image 32 montre la répartition d'intensité du faisceau dans le plan d'entrée de la fibre optique multimode 10. Comme cela est visible sur la courbe 31 ou sur l'image 32, des surintensités sont apparentes, susceptibles d'endommager la fibre 10. La déposante a montré que les surintensités résultent d'interférences de type speckle.

Un objet de la présente description est un procédé et un système de génération d'impulsions de forte puissance crête (typiquement autour de 10 MW ou au-dessus), autorisant une injection dans un dispositif fibré à coeur unique avec encore davantage de sécurité, et assurant une propagation sécurisée sur de longues distances tout en rendant possible l'utilisation de fibres flexibles.

## Résumé de l'invention

Dans la présente description, le terme « comprendre » signifie la même chose que « inclure » ou « contenir », et est inclusif ou ouvert et n'exclut pas d'autres éléments non décrits ou représentés.

En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, la présente description concerne un système de génération d'impulsions laser de forte puissance crête comprenant :

- une source lumineuse pour l'émission d'impulsions laser nanosecondes initiales;
- un dispositif fibré pour le transport d'impulsions laser comprenant au moins une première fibre multimode avec un coeur unique;
- un élément optique diffractif et un système optique agencés en amont du dispositif fibré, et configurés pour générer, à partir de chacune desdites impulsions laser initiales, une impulsion laser en entrée du dispositif fibré, la répartition spatiale d'intensité de chacune desdites impulsions laser sur une face d'entrée de ladite première fibre multimode comprenant une composante basse fréquence spatiale de type « top hat » sommée avec une composante haute fréquence spatiale résultant d'interférences de type speckle ;
- un module de mise en forme spatiale, agencé en amont du dispositif fibré, configuré pour transformer un premier champ électrique en un deuxième champ électrique formé d'une somme de N composantes au moins partiellement incohérentes spatialement entre elles, $N \geq 2$, de telle sorte que le contraste de la composante haute fréquence résultant des interférences de type speckle est réduit par rapport à un contraste initial défini sans module de mise en forme spatiale.

Selon la présente description, la face d'entrée de la fibre multimode est sensiblement confondue avec un plan de Fourier dudit système optique.

Le plan de Fourier est un plan où se forme une transformée de Fourier du champ électrique et correspond par exemple, dans le cas d'un faisceau collimaté, à un plan focal image d'une lentille ou d'un miroir.

Selon un ou plusieurs exemples de réalisation, le système optique comprend une ou plusieurs lentille(s) configurés pour former un système optique convergent et/ou un ou plusieurs éléments optiques réfléchissants, par exemple un miroir sphérique convergent ou un miroir parabolique hors axe. De manière générale, le système optique peut comprendre un ou plusieurs éléments optiques permettant de focaliser la lumière pour générer un plan de Fourier.

A noter que le DOE peut être réalisé sur une face d'un des éléments optiques du système optique, par exemple gravé sur un miroir concave (ou parabolique) formant ledit système optique.

Une répartition spatiale d'intensité de type carré ou « *top hat* » selon la présente description est une répartition spatiale d'intensité sensiblement uniforme, avec une variation spatiale de l'intensité faible, typiquement limitée à +/- 10%.

La déposante a montré qu'un tel système, grâce au module de mise en forme, permettait de réduire le contraste de la composante haute fréquence résultant d'interférences de type speckle, grâce à la diminution de la cohérence spatiale des impulsions ainsi mises en forme.

Selon un ou plusieurs exemples de réalisation, ledit module de mise en forme spatiale est agencé en amont dudit système optique. Cet agencement permet au module de mise en forme spatiale de recevoir un faisceau laser formé desdites impulsions sensiblement collimaté. Le module de mise en forme spatiale peut cependant être agencé avant ou après le DOE.

Selon un ou plusieurs exemples de réalisation, ledit module de mise en forme spatiale comprend un brouilleur de polarisation, configuré pour transformer un premier champ électrique en un deuxième champ électrique formé d'une somme de deux composantes selon deux axes orthogonaux, les deux composantes présentant un déphasage variable selon un axe donné.

Selon un ou plusieurs exemples de réalisation, le déphasage variable selon ledit axe est périodique, ce qui résulte en une variation périodique de l'état de polarisation du champ électrique en sortie du brouilleur de polarisation, et le brouilleur de polarisation est agencé de telle sorte qu'une répartition spatiale d'intensité dudit premier champ électrique comprend, selon ledit axe, une dimension supérieure à une période de variation de l'état de polarisation.

Selon un ou plusieurs exemples de réalisation, la source lumineuse est multimode longitudinale et le module de mise en forme spatiale comprend au moins un premier réseau de diffraction, configuré pour transformer un premier champ électrique en un deuxième champ électrique formé d'une somme de N composantes, $N \geq 2$, lesdites N composantes étant caractérisées par des vecteurs d'onde non colinéaires.

Selon un ou plusieurs exemples de réalisation, N est compris entre 2 et 10.

Selon un ou plusieurs exemples de réalisation, ledit module de mise en forme spatiale comprend au moins un deuxième réseau agencé à la suite dudit premier réseau.

Selon un ou plusieurs exemples de réalisation, ledit module de mise en forme spatiale comprend en outre un brouilleur de polarisation, ledit au moins un premier réseau étant agencé avant le brouilleur de polarisation.

Selon un deuxième aspect, la présente description concerne un procédé de génération d'impulsions laser de forte puissance crête comprenant :

- l'émission d'impulsions laser nanosecondes initiales au moyen d'une source lumineuse;
- la génération, au moyen d'un élément optique diffractif et d'un système optique, à partir de chacune desdites impulsions laser initiales, d'une impulsion laser, la répartition spatiale d'intensité de chacune desdites impulsions laser dans un plan de Fourier du système optique comprenant une composante basse fréquence spatiale de type « top hat » sommée avec une composante haute fréquence résultant d'interférences de type speckle;

- le transport desdites impulsions laser au moyen d'un dispositif fibré comprenant une fibre multimode avec un coeur unique, une face d'entrée de la fibre multimode étant sensiblement confondue avec ledit plan de Fourier du système optique ;
- la mise en forme spatiale desdites impulsions laser initiales au moyen d'un module de mise en forme spatiale, agencé en amont du dispositif fibré, et configuré pour transformer un premier champ électrique en un deuxième champ électrique formé d'une somme d'une pluralité de N composantes, $N \geq 2$, lesdites N composantes étant au moins partiellement incohérentes spatialement entre elles, de telle sorte que le contraste de ladite composante haute fréquence résultant d'interférences de type speckle, sur la face d'entrée de ladite première fibre multimode, est réduit par rapport à un contraste initial défini sans module de mise en forme spatiale.

## Brève description des figures

D'autres avantages et caractéristiques de l'invention apparaîtront à la lecture de la description, illustrée par les figures suivantes :

[Fig. 1], déjà décrite, représente un schéma simplifié illustrant des éléments d'un système de génération d'impulsions laser de forte puissance crête selon l'état de l'art ;

[Fig. 2] représente un schéma simplifié illustrant un système de génération d'impulsions laser de forte puissance crête selon la présente description ;

[Fig. 3] représente un schéma simplifié illustrant un brouilleur de polarisation adapté pour la mise en forme spatiale d'impulsions dans un système selon la présente description et les effets d'un tel brouilleur de polarisation ;

[Fig. 4], représente un schéma simplifié illustrant des éléments d'un système de génération d'impulsions laser de forte puissance crête selon la présente description avec un module de mise en forme spatiale comprenant un brouilleur de polarisation, tel que décrit par exemple en référence à la Fig.3 ;

[Fig. 5A] représente un schéma simplifié illustrant un module de mise en forme spatiale avec un premier réseau, pour la mise en forme spatiale d'impulsions dans un système selon la présente description, et les effets d'un tel module de mise en forme spatiale;

[Fig. 5B] représente un schéma simplifié illustrant un module de mise en forme spatiale avec un premier réseau et un deuxième réseau, pour la mise en forme spatiale d'impulsions dans un système selon la présente description, et les effets d'un tel module de mise en forme spatiale ;

[Fig. 6], représente un schéma simplifié illustrant des éléments d'un système de génération d'impulsions laser de forte puissance crête selon la présente description avec un module de mise en forme spatiale comprenant un réseau, tel que décrit par exemple en référence à la Fig.5A ;

[Fig. 7], représente un schéma simplifié illustrant des éléments d'un système de génération d'impulsions laser de forte puissance crête selon la présente description avec un module de mise en forme spatiale comprenant brouilleur de polarisation tel que décrit par exemple en référence à la Fig. 3 et un réseau, tel que décrit par exemple en référence à la Fig.5A.

## Description détaillée de l'invention

Sur les figures, les éléments ne sont pas représentés à l'échelle pour une meilleure visibilité.

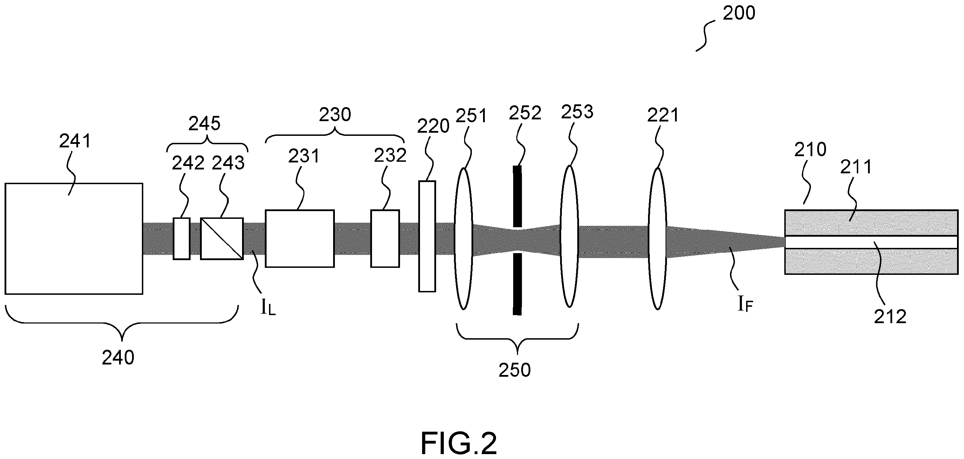

La Fig. 2 représente un schéma simplifié illustrant un système 200 de génération d'impulsions laser de forte puissance crête selon la présente description.

Le système 200 comprend une source lumineuse 240 pour l'émission d'impulsions laser nanosecondes initiales $I_L$ et un dispositif fibré pour le transport des impulsions laser, comprenant au moins une première fibre multimode 210 avec un coeur unique 212 et une gaine 211.

La source lumineuse 240 comprend dans cet exemple une source laser 241, par exemple un laser de type Q-Switch Nd :YAG pour l'émission d'impulsions nanosecondes. Le laser peut être équipé d'un module doubleur de fréquence afin d'émettre à une longueur d'onde de 532 nm. Plus généralement, la source laser est par exemple un laser à solide Q-switch actif ou passif pour l'émission d'impulsions nanosecondes de forte puissance crête (supérieur à 10 MW). Il peut s'agir par exemple d'un laser Yb :YAG ou encore titane Saphir suivant la longueur d'onde à laquelle on souhaite travailler. La source laser est naturellement polarisée, la polarisation pouvant être linéaire, circulaire ou elliptique.

La source lumineuse 240 peut contenir (optionnellement) un atténuateur de la puissance optique d'émission 245, comprenant par exemple une lame demi-onde suivie d'un ou plusieurs filtre(s) en polarisation (lame de brewster, prisme de Glan ou prisme de Glan Thomson par exemple).

Le système 200 comprend par ailleurs un élément optique diffractif (DOE) 220 et un système optique 221, les éléments 220 et 221 étant agencés en amont du dispositif fibré, et configurés pour générer, sur une face d'entrée de ladite première fibre multimode 210, à partir de chaque impulsion laser initiale, une impulsion laser en entrée de fibre

$I_F$ définie par un champ électrique comprenant une répartition spatiale d'intensité de type « top hat ». Le système 200 comprend par exemple un module de mise en forme spatiale 230 qui sera décrit plus en détails par la suite et, dans cet exemple, un dispositif de filtrage 250. Le dispositif de filtrage 250 comprend par exemple un jeu de lentilles 251, 253 configurées pour former un plan focal intermédiaire dans lequel est agencé un diaphragme 252. Un tel dispositif de filtrage est configuré pour supprimer des ordres de diffraction indésirables du DOE (typiquement l'ordre 0 et tous les ordres supérieurs ou égaux à 2).

En sortie de la source lumineuse 240, chaque impulsion laser nanoseconde initiale $I_L$ est défini par un champ électrique initial une pulsation $\omega_0$. Dans le cas d'un champ se propageant selon une direction z et polarisé par exemple linéairement selon un vecteur $\vec{e_1}$, le champ d'une impulsion laser initiale $I_L$ s'écrit :

[Math 1]

$$\vec{E}(x, y, z, t) = E_0(x, y, t)e^{j(\omega_0 t - k.z)}.\vec{e_1}$$

Le champ en sortie du laser présente une cohérence spatiale que l'on peut qualifier par un degré de cohérence. Le degré de cohérence spatiale de la radiation entre deux points $(x_i, y_i)$ et $(x_2, y_2)$ situés dans un plan perpendiculaire à la direction de propagation z s'exprime de la façon suivante :

[Math 2]

$$\gamma(x_2 - x_1, y_2 - y_1) = \frac{\langle \vec{E}(x_1, y_1, z, t).\vec{E}^*(x_2, y_2, z, t)\rangle}{\sqrt{\langle |\vec{E}(x_1, y_1, z, t)|^2\rangle \langle |\vec{E}(x_2, y_2, z, t)|^2\rangle}}$$

Ainsi, une radiation est totalement cohérente spatialement lorsque le degré de cohérence atteint la valeur unité pour tout couple de points. Inversement, la cohérence spatiale tend vers 0 lorsque le degré de cohérence est faible, pour l'ensemble des couples de points. Un moyen d'observer expérimentalement le degré de cohérence d'une source est de mesurer le contraste d'une figure d'interférence (type fentes d'Young ou figure de speckle). Plus la radiation incidente est cohérente spatialement plus le contraste de la figure d'interférence est élevé.

En pratique, dans le cas de l'utilisation d'un DOE dans un système de génération d'impulsions selon la présente description, la déposante a montré que la cohérence de la radiation incidente se traduisait par un contraste élevé de la composante haute fréquence résultant des interférences de type speckle.

Le DOE 220 comprend par exemple, de façon connue, dans le cas d'un composant en transmission, une plaque d'un matériau, par exemple de la silice, gravée dans l'épaisseur afin de générer un déphasage variable spatialement du champ électrique incident pour obtenir, dans un plan de Fourier confondu avec un plan d'entrée de la fibre multimode 210, c'est-à-dire dans cet exemple dans un plan focal du système optique 221, un champ électrique d'amplitude souhaitée.

Le système optique 221 peut comprendre une ou plusieurs lentille(s) configurés pour former un système optique convergent et/ou un ou plusieurs éléments optiques réfléchissants, par exemple un miroir sphérique convergent ou un miroir parabolique hors axe. De manière générale, le système optique 221 peut comprendre un ou plusieurs éléments optiques permettant de focaliser la lumière pour générer un plan de Fourier. Bien que représenté comme deux éléments séparés sur la Fig. 2, le DOE 220 peut également être gravé directement sur l'un des éléments optiques formant le système optique 221.

Bien que sur la Fig. 2, le DOE 220 soit représenté de telle sorte à fonctionner en transmission, le montage peut être adapté pour un fonctionnement du DOE en réflexion. Si on note t(x,y) est le coefficient de transmission en phase du DOE, le champ électrique transmis juste après le DOE s'écrit :

[Math 3]

$$\vec{E_t}(x, y, z, t) = E_0(x, y, t)e^{j(\omega_0 t - k.z)}.t(x, y).\vec{e_1}$$

Dans le plan de Fourier, le champ électrique est donné par :

6

[Math 4]

$$\vec{E}_{Out}(u, v)\alpha\ \widetilde{E_0}(u, v, t) \otimes \tilde{T}(u, v).\overrightarrow{\boldsymbol{e_1}} = S(u, v).\overrightarrow{\boldsymbol{e_1}}$$

Où $u = \frac{x}{\lambda f}, v = \frac{y}{\lambda f}$ sont les coordonnées dans l'espace de Fourier de la lentille. Les fonctions $\widetilde{E_0}(u, v)$ et $\tilde{T}(u, v)$ représentent les transformées de Fourier spatiales dans le plan de focale de la lentille de $E_0(x, y, t)$ et $t(x, y)$.

Si le champ a un très fort degré de cohérence spatiale, ce qui est le cas par exemple d'impulsions laser gaussienne TEM00, l'intensité lumineuse des impulsions dans le plan de Fourier s'écrit :

[Math 5]

$$I_{Out}(u, v)\alpha\ |S(u, v)|^2$$

A noter que si le champ est incident sur le DOE avec un vecteur d'onde $\vec{k}'$ faisant un angle $\theta_0$ avec l'axe optique (z), la figure d'intensité sera décalée spatialement de l'axe optique d'une distance $u_0$ avec $u_0 = f.tan(\theta_0)$.

Dans les équations précédentes, on a supposé cependant que le DOE est « parfait », c'est-à-dire sans rugosités. En pratique, le procédé de fabrication du DOE entraine une rugosité aléatoire de la surface du DOE qui se traduit sur la transmission du DOE par un terme de phase aléatoire $e^{j\varphi_{diff}(x,y)}$. Ainsi, on montre que le champ mis en forme dans le plan de Fourier de la lentille s'exprime par :

[Math 6]

$$\overrightarrow{E_{out}}(u, v)\ \alpha\ \tilde{E}_0(u, v, t) \otimes \tilde{T}(u, v)\overrightarrow{\boldsymbol{e_1}} + \int E_0(x, y, t).e^{j\varphi_{diff}(x,y)}.e^{-j2\pi(xu+yv)}.dx\,dy\,.\overrightarrow{\boldsymbol{e_1}}$$

Le champ est ainsi composé d'une partie déterministe permettant d'obtenir la mise en forme souhaitée et d'une partie aléatoire attribué à la rugosité du DOE. On peut ainsi écrire le champ électrique dans le plan de Fourier sous la forme d'une somme de deux contributions :

[Math 7]

$$\overrightarrow{E_{Out}}(u, v) = S(u, v)\overrightarrow{\boldsymbol{e_1}} + E_{rand}(u, v)\overrightarrow{\boldsymbol{e_1}}$$

Avec

$$E_{rand} = \int E_0(x, y, t).e^{j\varphi_{diff}(x,y)}.e^{-j2\pi(xu+yv)}.dx\,dy$$

$E_{rand}$ représente ainsi un terme de phase aléatoire dans le plan de Fourier de la lentille dû à la rugosité du DOE.
Les deux contributions du champ interfèrent entre elles ce qui donne le caractère « speckelisé » de l'intensité des impulsions dans le plan de Fourier.
Plus précisément, l'intensité lumineuse des impulsions dans le plan de Fourier s'écrit :

[Math 8]

$$I_{Out}(u, v) = |S(u, v)|^2 + E_{rand}^2 + 2E_{rand}S(u, v)\cos(\varphi_{diff})$$

L'intensité lumineuse comprend donc un premier terme basse fréquence spatiale de type top hat et un terme haute fréquence spatiale, de phase aléatoire, qui affecte la mise en forme des impulsions dans le plan d'entrée de la fibre multimodes. Il en résulte une figure de diffraction $I_{Out}(u, v)$ composée de « grains » d'intensité aléatoire (« speckle ») comme illustré sur le schéma 31 (Fig. 1).

Le module de mise en forme spatiale 230 du système 200 vise à réduire le contraste de la composante haute fréquence résultant des interférences de type speckle sur la face d'entrée de ladite première fibre multimode.

Le contraste de la figure de diffraction $I_{Out}(u, v)$ peut s'exprimer par :

[Math 9]

$$C = \frac{\sigma_I}{\langle I \rangle}$$

Où $\langle I \rangle$ est la moyenne de l'intensité lumineuse du « top hat » et $\sigma_I$ est l'écart-type.

La déposante a montré que le choix d'un module de mise en forme spatiale 230, agencé en amont du dispositif fibré, et configuré pour transformer un premier champ électrique en un deuxième champ électrique formé d'une somme d'une pluralité N de composantes, au moins partiellement incohérentes spatialement entre elles, permettait de réduire le contraste de la composante haute fréquence résultant des interférences de type speckle en entrée de la fibre multimode et de ce fait, de sécuriser l'injection dans la fibre multimode d'impulsions de forte puissance crête.

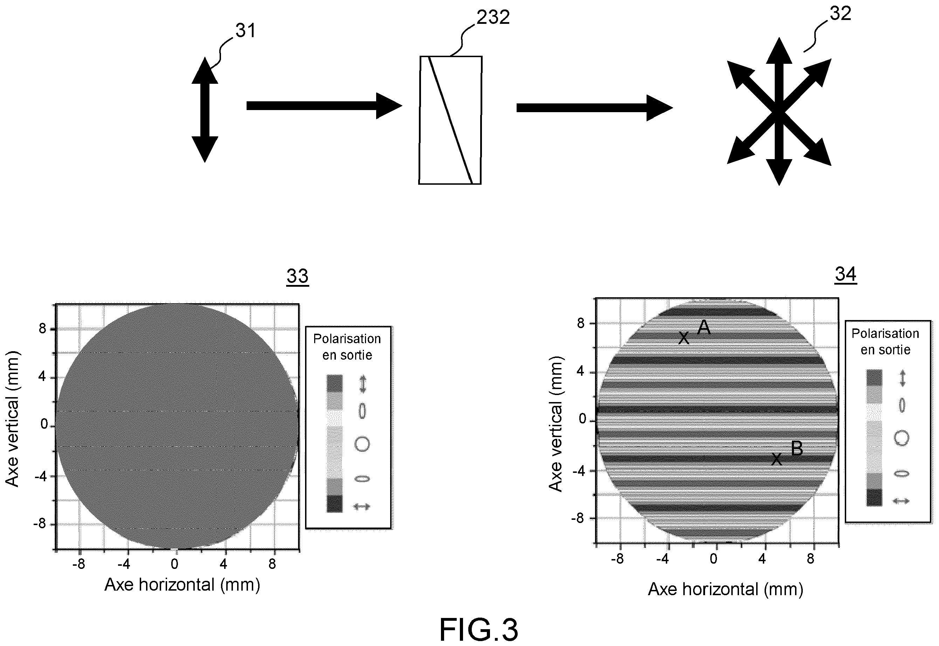

La Fig. 3 représente un schéma simplifié illustrant un brouilleur de polarisation 232 configuré pour la mise en forme spatiale d'impulsions dans un système selon la présente description et les effets d'un tel brouilleur de polarisation. Le brouilleur de polarisation est par exemple un dépolariseur de Cornu (ou dépolariseur à quartz), un dépolariseur à cristaux liquide ou à un dépolariseur à double prisme.

On considère un premier champ électrique polarisé, de polarisation linéaire, circulaire ou elliptique en sortie du laser 241. Dans la suite, l'effet du dépolariseur, ou brouilleur de polarisation, est expliqué dans le cas d'une polarisation linéaire, illustré par la double flèche 31 sur la Fig. 3, mais les effets sont identiques quelle que soit la polarisation initiale des impulsions en sortie de laser. L'état de polarisation en sortie du dépolariseur est symbolisé par les flèches 32, Fig. 3. Par ailleurs, on fait dans la suite l'hypothèse d'un dépolariseur de Cornu (ou à quartz), mais des effets similaires pourraient être montrés avec d'autres types de dépolariseur.

Le champ électrique polarisé s'écrit suivant l'équation [MATH 1] ci-dessus.

Un dépolariseur de Cornu comprend deux prismes présentant un angle à 45°. Les prismes sont en quartz et sont mis en contact afin de former un cube. Le quartz étant un cristal biréfringent, les prismes sont disposés de façon à ce que leur axe d'indice rapide soit orienté à 90°. Ainsi chaque prisme agit comme une lame de phase. Comme l'épaisseur de matière traversée par la lumière varie spatialement, le déphasage du faisceau varie spatialement. Le déphasage est donné par la formule :

[Math 10]

$$\delta(y) = \frac{2\pi}{\lambda}(n_1 - n_2)[2y - a]$$

Où $n_2$ et $n_1$ sont respectivement l'indice extraordinaire et ordinaire du Quartz, a est la longueur sur laquelle les deux prismes sont en contact et d est la longueur du dépolariseur. En sortie du dépolariseur, nous avons opéré une mise en forme spatiale du champ électrique dans le plan (x, y) perpendiculaire à l'axe (z) de propagation du faisceau. Le champ électrique en sortie du dépolariseur s'écrit :

[Math 11]

$$\vec{E}(x, y, z, t) = E_0(x, y, t)\frac{e^{j(\omega_0 t - kz)}}{\sqrt{2}}\left(\vec{e_1} + \vec{e_2}e^{-j\frac{2\pi}{\lambda}((n_1 - n_2)[2y - a])}\right)$$

Ainsi, lorsque le faisceau incident présente une polarisation linéaire uniforme, en sortie du composant, le faisceau présentera une polarisation périodique selon la direction y. De façon plus précise, chaque cordonnée spatiale du faisceau à un état de polarisation différent. Dans l'hypothèse ci-dessus, selon l'axe y, le faisceau présentera successivement des états de polarisation, linéaire, circulaire et elliptique avec des orientations différentes.

La variation de l'état de polarisation sera périodique selon l'axe y. La période de variation de la polarisation s'exprime par :

[Math 12]

$$\Delta y = \frac{\lambda}{2(n_2 - n_1)} + \frac{a}{2}$$

Ainsi pour avoir une dépolarisation efficace, le faisceau incident présentera de façon avantageuse, selon l'axe y, une dimension supérieure à la période de variation de l'état de polarisation en sortie de dépolariseur.

Pour un dépolariseur à quartz de la société Thorlabs ® par exemple, la période de variation spatiale de la polarisation est de 4 mm pour une longueur d'onde de 635 nm. En pratique, on cherchera à ce que le faisceau incident sur le dépolariseur présente une dimension au moins égale à la période de variation de polarisation, avantageusement au moins égale à deux fois la période de polarisation, pour obtenir une dépolarisation efficace et par conséquent un degré de polarisation qui tend vers zéro.

Une visualisation de l'effet d'un dépolariseur sur la mise en forme spatiale des impulsions incidentes est illustré sur les schémas 33, 34 de la Fig. 3.

Le schéma 33 représente l'état de polarisation en entrée du polariseur, dans cet exemple une polarisation uniforme (polarisation linéaire).

Le schéma 34 représente l'état de polarisation en sortie du polariseur. On observe une polarisation variable suivant les coordonnées spatiales (x,y) du faisceau considéré. Si nous considérons deux points A, B de coordonnées (xi,yi) et $(x_2,y_2)$ respectivement, on observe une chute du degré de cohérence spatiale normalisée tel que défini par l'équation [MATH 2] ci-dessus.

Dans cet exemple, les points A et B sont polarisés orthogonalement, ainsi le degré de cohérence chute à 0 car le numérateur correspondant au produit scalaire des champs en (xi,yi) et $(x_2,y_2)$ est nul. On peut donc conclure que dépolariser spatialement les impulsions initiales induit une baisse du degré de cohérence et, de ce fait, entraînera une réduction du contraste de la figure de speckle. Lorsque le degré de polarisation (DOP) du faisceau tend vers 0, le faisceau est considéré comme totalement dépolarisé, et le champ électrique en sortie du dépolariseur peut s'écrire comme la somme de deux contributions polarisées orthogonalement, et donc incohérentes spatialement.

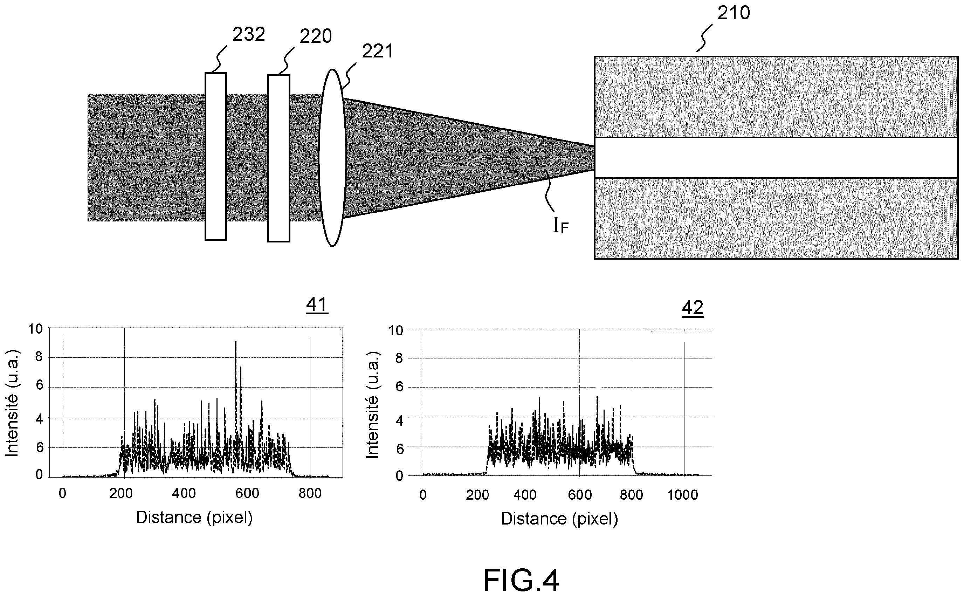

La Fig. 4 représente ainsi un schéma simplifié illustrant des éléments d'un système de génération d'impulsions laser de forte puissance crête selon la présente description avec un module de mise en forme spatiale comprenant un brouilleur de polarisation 232, tel que décrit par exemple en référence à la Fig.3.

La déposante a montré que si le champ électrique incident sur le DOE 220 est au moins partiellement dépolarisé, ceci aura pour effet de réduire le contraste du speckle. En particulier, comme vu précédemment, un champ complètement dépolarisé spatialement peut être décomposé en deux états de polarisation orthogonaux qui ne peuvent pas interférer entre eux. Chacun des états de polarisation va générer un motif de speckle qui n'est pas corrélé spatialement avec l'autre état de polarisation.

Plus précisément, dans le cas d'une lumière incidente composée de deux états de polarisation indépendants (orthogonales), le champ des impulsions $I_F$ dans le plan de Fourier du système optique 221 utilisé pour la mise en forme peut s'écrire :

[Math 13]

$$\vec{E}_{Out}(u, v)\alpha \left[ E_0(x, y, t) \int \left( t(x, y) + e^{j\varphi_{diff}(x,y)} \right) . e^{-j2\pi(xu+yv)} dx\, dy \right] \left( \frac{1}{\sqrt{2}}\vec{e_1} + \frac{1}{\sqrt{2}}\vec{e_2} \right)$$

Soit,

[Math 14]

$$\vec{E}_{Out}(u, v)\, \alpha\, \frac{1}{\sqrt{2}}[S(u, v) + E_{rand}\, (\varphi_{a1})]\vec{e_1} + \frac{1}{\sqrt{2}}[S(u, v) + E_{rand}\, (\varphi_{a2})]\vec{e_2}$$

L'intensité lumineuse dans le plan d'entrée de la fibre multimode 210 (Fig. 4) s'écrit alors :

[Math 15]

$$I_{Out}(u,v) \, \alpha \, |S(u,v)|^2 + E_{rand}^2 + E_{rand}E_{Out}\cos(\varphi_{a1}) + E_{rand}E_{Out}\cos(\varphi_{a2})$$

On constate à partir de l'équation ci-dessus que le profil d'intensité est composé de la superposition de deux signaux aléatoires indépendants. Chacun de ces signaux aléatoires présente un écart type de $\frac{\sigma_I}{2}$ où $\sigma_I$ est l'écart type de la répartition d'intensité sans module de mise en forme. Ainsi la répartition d'intensité aura un écart type correspondant à la moyenne quadratique des écarts type des deux signaux indépendantes, égal à $\frac{\sigma_I}{\sqrt{2}}$. Il en résulte une diminution du contraste su speckle d'un facteur $\sqrt{2}$.

Ainsi, sur la Fig. 4, on observe (schéma 42) le profil d'intensité top hat en entrée de la fibre multimode. Dans cet exemple, le contraste du speckle est réduit d'un facteur $\sqrt{2}$ par rapport au contraste du speckle sans mise en forme (schéma 41, Fig. 4).

Les calculs ci-dessus montrent que la mise en forme spatiale de l'état de polarisation d'un laser permet de réduire le degré de cohérence spatiale de la radiation. Lorsque la radiation est équivalente à deux états de polarisation orthogonaux, le contraste de la figure de speckle peut être réduit d'un facteur $\sqrt{2}$. Bien entendu, dans le cas d'une dépolarisation moins efficace, le contraste du speckle sera réduit, mais d'un facteur moins important.

Les calculs ci-dessus ont été réalisés avec un dépolariseur de Cornu. Bien entendu, une démonstration de la dépolarisation sur le contraste du speckle serait la même avec d'autres types de dépolariseur.

Par exemple, un dépolariseur à cristaux liquide peut être configuré pour présenter un déphasage avec une expression similaire à celle issue d'un dépolariseur de type Cornu. De tels dépolariseurs à cristaux liquides sont par exemple décrits dans US9599834 [Réf. 6] et comprennent un mince film de polymère à cristaux liquides pris en sandwich par exemple entre deux plaques de verre, par exemple du N-BK7.

Le dépolariseur à double prisme (composé respectivement de quartz et de silice) est similaire au dépolariseur Cornu ; cependant, l'angle entre les deux prismes est beaucoup plus petit (typiquement 2°) et seul le premier prisme est biréfringent. Le deuxième prisme est en silice fondue, qui a un indice de réfraction très similaire au quartz. L'axe rapide du prisme en quartz est généralement à 45° du coin. L'ensemble du composant est plus compact qu'un dépolariseur de Cornu (pour la même ouverture). En sortie du composant, la polarisation est périodique. Parce que l'angle des prismes est beaucoup plus petit que dans un dépolariseur Cornu, la période de dépolarisation spatiale est plus grande.

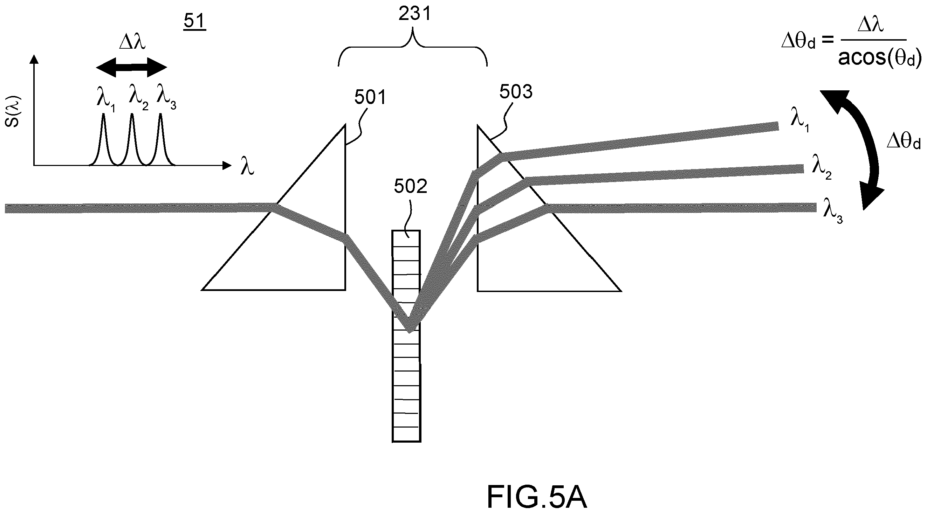

La Fig. 5A représente un schéma simplifié illustrant un autre exemple de module de mise en forme spatiale pour la mise en forme spatiale d'impulsions dans un système selon la présente description.

Dans cet exemple, le module de mise en forme spatiale 231 comprend un élément dispersif 502, par exemple un réseau. Comme illustré sur la Fig. 5A, le réseau est agencé dans cet exemple entre deux prismes 501, 503 (qui pourraient être remplacés par des miroirs) ; les prismes sont configurés pour défléchir les faisceaux incidents de telle sorte qu'ils arrivent sur le réseau avec un angle d'incidence recherché, par exemple un angle d'incidence permettant de maximiser l'efficacité de diffraction du réseau.

Un module de mise en forme spatiale à réseau tel que décrit sur la Fig. 5A permet la mise en forme d'impulsions laser initiales dont le champ électrique comprend une pluralité de raies spectrales. Pour cela, la source laser 241 est une source laser multimode longitudinale, par exemple un laser Nd :YAG de type q-switch non injecté.

Comme illustré que la Fig. 5A, le réseau permet de décorréler spatialement les N raies spectrales du laser. Ainsi l'utilisation d'un réseau de diffraction permet de réduire le contraste du speckle présent dans la mise en forme d'un faisceau laser au moyen d'un élément d'optique diffractive.

Plus précisément, pour démontrer l'effet d'un tel module de mise en forme spatiale, nous considérons ci-dessous une onde électromagnétique multimode longitudinale plane incidente sur un réseau de diffraction présentant un pas *a*. L'onde a pour expression :

[Math 16]

$$\vec{E}(x,y,z,t) = \frac{E_0(x,y,t)}{\sqrt{N}}\left(\sum_0^N e^{j[(\omega_0+n\Delta\omega)t-k.z+\phi_n]} + cc\right)\vec{e_1}$$

Le paramètre $\Delta\omega = 2\pi\frac{c}{2L}$ , est relié à l'intervalle spectral libre de la cavité laser utilisée. $\phi_n$ est un terme de phase aléatoire associé à chacune des composantes spectrales.

L'onde incidente sur le réseau 502 (Fig. 5A) est diffracté selon un angle de diffraction du réseau est donné par la loi suivante :

[Math 17]

$$\sin(\theta_d) = m\frac{\lambda}{a} + \sin(\theta_0)$$

Où $\theta_d$, $\theta_0$, et m sont respectivement l'angle de diffraction par le réseau, l'angle d'incidence, et l'ordre de diffraction du réseau. Dans le cas par exemple d'un réseau optimisé dans l'ordre -1 à Littrow ($\theta_0 = -\theta_d$), l'angle de diffraction est donné par $\sin(\theta_d) = \frac{\lambda}{2a}$ .

L'angle de diffraction dépend de la longueur d'onde d'illumination et donc du spectre du laser utilisé. Si le laser émet une multitude de raies spectrales centrée autour d'une longueur d'onde $\lambda_0$, la dispersion angulaire induite par le réseau est donnée par :

[Math 18]

$$\Delta\theta_d = \frac{\Delta\lambda}{a.\cos(\theta_d)}$$

Si le laser émet plusieurs raies séparées par un intervalle spectrale libre. Chaque raie du laser sera diffractée par le réseau avec un angle :

[Math 19]

$$\theta_n = \theta_d + n\frac{c.\Delta\upsilon}{\upsilon_0^2.a.\cos(\theta_d)} = \theta_d + n.\Delta\theta_d$$

n indique ici le mode longitudinal émis par le laser : (e.g. n=0 correspond au mode $\nu_0$, n=1 correspond au mode $\nu_0+\Delta\nu$, etc.).

A titre d'exemple, dans le cas d'un laser présentant un intervalle spectrale libre (ISL) avec ISL = c/2L où L est la longueur de la cavité, de 250 MHz, à 1064 nm, et pour un angle d'incidence de 67,7°, la dispersion angulaire entre chaque mode est de 1,075 μrad.

Ainsi, si le laser émet plusieurs modes longitudinaux, le champ électrique total diffracté s'exprime par :

[Math 20]

$$\vec{E} = E_0(x, y, t)\left(\sum_0^N \frac{1}{\sqrt{N}} e^{j[(\omega_0 + n\Delta\omega)t - \overrightarrow{k_n}.\vec{r} + \phi_n]} + cc\right)\overrightarrow{e_1}$$

Ainsi, pour un champ incident sur le réseau constitué de N fréquences optique $\upsilon_n = \upsilon_0 + n.\Delta\upsilon$, du fait que chaque fréquence optique se propage dans une direction différente, on observe une baisse du degré de cohérence du champ optique.

Plus précisément, le vecteur d'onde associé à chaque composante spectrale est donné par :

[Math 21]

$$\vec{k_n} = \begin{pmatrix} k_{nx} \\ k_{nz} \end{pmatrix} = \begin{pmatrix} \dfrac{2\pi}{\lambda_0} \cdot \sin(\theta_n) \\ \dfrac{2\pi}{\lambda_0} \cdot \cos(\theta_n) \end{pmatrix} \sim \begin{pmatrix} \dfrac{2\pi}{\lambda_0} \cdot \left[ \sin(\theta_d) + \dfrac{n.\Delta v.c}{2v_0^2.a} \right] \\ \dfrac{2\pi}{\lambda_0} \cdot \left[ \cos(\theta_d) - \dfrac{n.\Delta v.c}{2v_0^2.a} \tan(\theta_d) \right] \end{pmatrix}$$

La présence d'une multitude de vecteurs d'onde en sortie du réseau équivaut à une distribution angulaire des composantes spectrales du laser. Le degré de cohérence spatiale de la source est ainsi réduit.

Si le champ électrique diffracté est incident sur le DOE, nous aurons dans le plan de Fourier de la lentille, une répartition d"intensité lumineuse suivant la loi :

[Math 22]

$$I(u, v) = \sum_{0}^{N} \frac{1}{N} I_{Out}(u - n.F.\tan\theta_n, v)$$

La figure d'intensité dans le plan de Fourier correspond donc à une somme de figures de diffraction décalées spatialement suivant la direction u, chaque composante spectrale étant composée de la même partie déterministe et de la même partie aléatoire. Chaque figure de diffraction correspondant à n mode longitudinal est décalée de la distance $F.\tan\theta_n$ des figures de diffraction correspondant aux modes longitudinaux qui lui sont adjacents. Si les N raies spectrales du laser respecte la condition . $\tan(\Delta\theta_d) > \dfrac{\lambda}{D}$ , alors le profil d'intensité sera composé d'une somme de profil bruités non-corrélés entre eux. Le contraste du speckle observé sera ainsi réduit d'un facteur $\sqrt{N}$ .

A noter que dans l'exemple de la Fig. 5A, le module de mise en forme comprend un seul réseau.

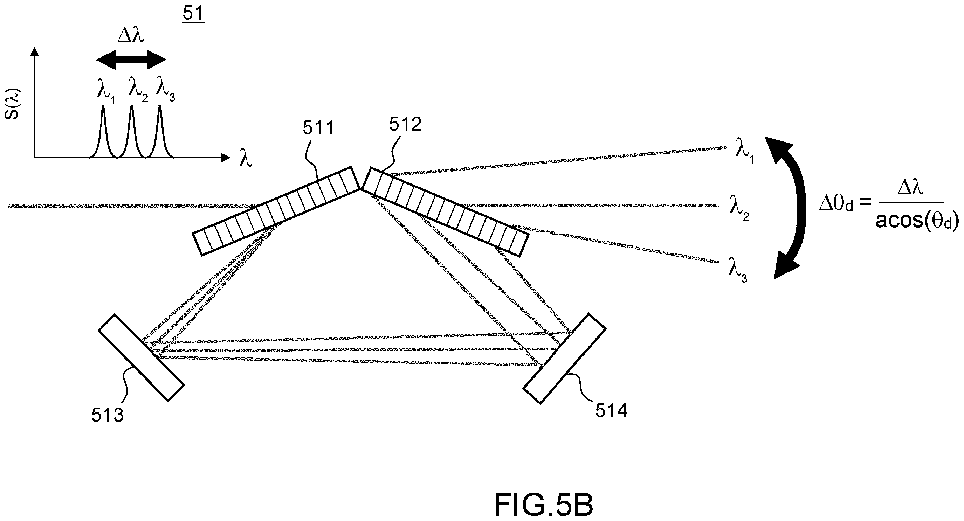

La Fig. 5B représente un schéma simplifié illustrant un module de mise en forme spatiale avec un premier réseau 511 et un deuxième réseau 512, pour la mise en forme spatiale d'impulsions dans un système selon la présente description. Dans cet exemple, deux miroirs 513, 514 sont configurés pour acheminer les faisceaux avec un angle d'incidence sur chacun des réseaux qui maximise leur efficacité respective. L'utilisation de deux réseaux au lieu d'un seul (Fig. 5A) permet de doubler la dispersion angulaire.

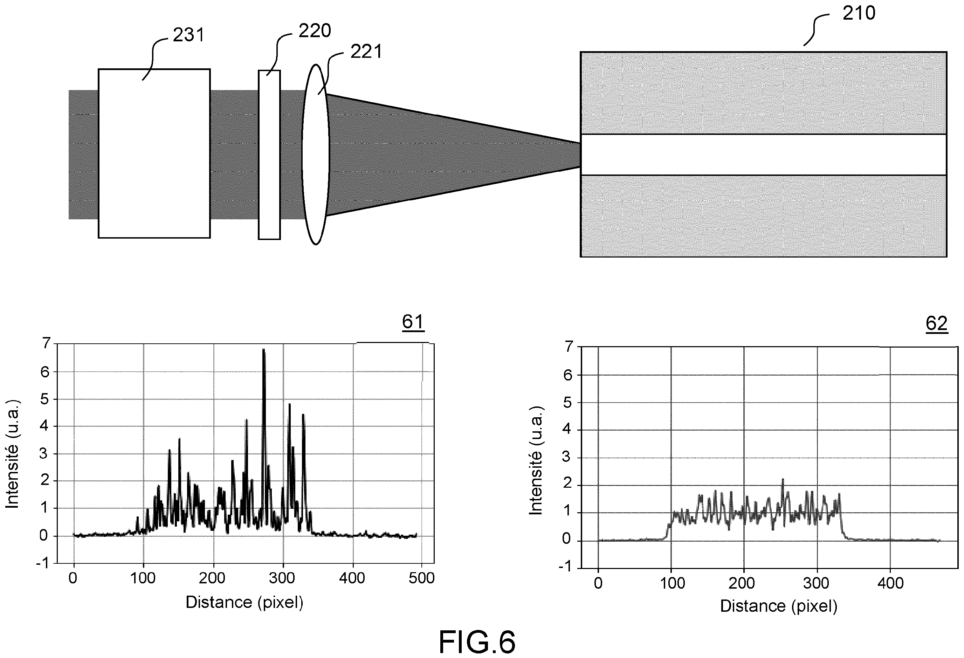

La Fig. 6 représente un schéma simplifié illustrant des éléments d'un système de génération d'impulsions laser de forte puissance crête selon la présente description avec un module de mise en forme spatiale 231 comprenant un ou plusieurs réseaux, tel que décrit par exemple en référence à la Fig.5A ou à la Fig. 5B.

Le schéma 61 (Fig. 6) illustre un profil d'intensité « top hat » en entrée de la fibre multimode 210, sans module de mise en forme. Le contraste du speckle est dans cet exemple égal à 0,72.

Le schéma 62 (Fig. 6) illustre un profil d'intensité « top hat » en entrée de la fibre multimode 210, avec un module de mise en forme à un réseau tel qu'illustré par exemple sur la Fig. 5A. le réseau dans cet exemple comprend un pas de 575 nm et est optimisé pour une longueur d'onde de 1064 nm avec un angle d'incidence LITTROW de 67,7°. La source lumineuse utilisée est dans cet exemple un laser émettant à 1064 nm et présentant plusieurs mode longitudinaux (ISL = 250 MHz). Le module de mise en forme spatiale ainsi réalisé permet de réduire le contraste initial d'un facteur 2,5.

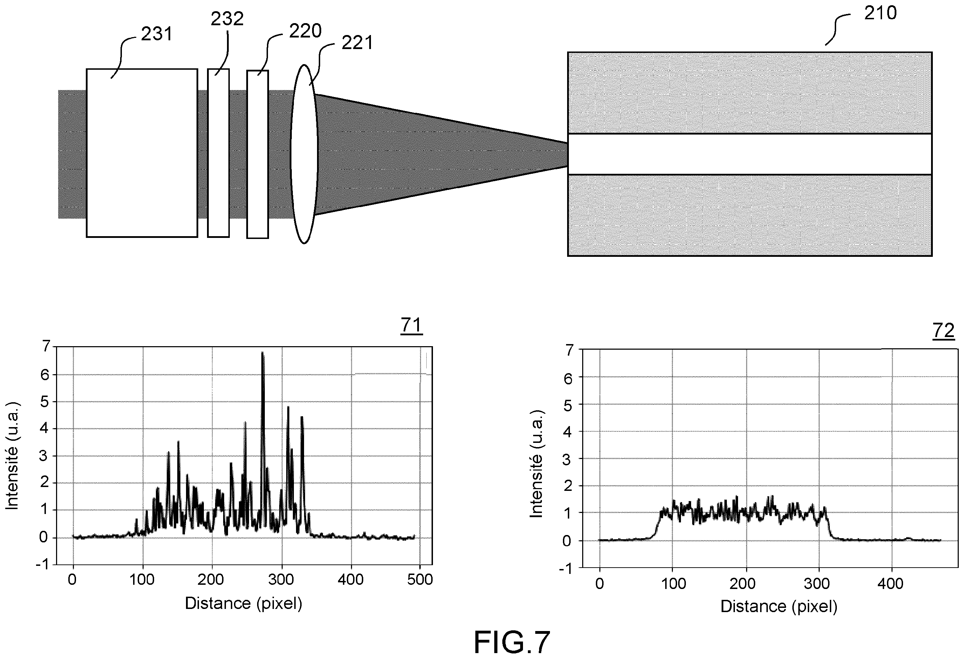

Bien entendu, le module de mise en forme peut comprendre tout à la fois un brouilleur de polarisation 232 et dispositif à réseau 231, comme cela est décrit sur la Fig. 7.

Dans ce cas, on veillera à ce que le dispositif à réseau 231 soit en amont du dépolariseur 232. En effet, la diffraction peut être impactée par la dépolarisation du faisceau incident. Comme cela peut s'observer sur les schémas 71, 72, l'effet des modules 231, 232 s'accumule de telle sorte que le contraste du speckle passe de 0.72 (schéma 71, sans module de mise en forme) à 0.2 (schéma 72).

Bien que décrite à travers un certain nombre d'exemples de réalisation, les procédés et les dispositifs selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**REFERENCES**

Réf. 1 : US6002102
Réf. 2 : EP1528645
Réf. 3 : US6818854
Réf. 4: WO2019233899
Réf. 5: WO2019233900
Réf. 6: US9599834

**Revendications**

1. Système (200) de génération d'impulsions laser de forte puissance crête comprenant :

   - une source lumineuse (240) pour l'émission d'impulsions laser nanosecondes initiales ($I_L$);
   - un dispositif fibré pour le transport d'impulsions laser comprenant au moins une première fibre multimode (210) avec un coeur unique (212);
   - un élément optique diffractif (220) et un système optique (221) agencés en amont du dispositif fibré, et configurés pour générer, à partir de chacune desdites impulsions laser initiales, une impulsion laser ($I_F$) en entrée du dispositif fibré, la répartition spatiale d'intensité de chacune desdites impulsions laser ($I_F$) sur une face d'entrée de ladite première fibre multimode comprenant une composante basse fréquence spatiale de type « top hat » sommée avec une composante haute fréquence spatiale résultant d'interférences de type speckle ;
   - un module de mise en forme spatiale (230), agencé en amont du dispositif fibré, configuré pour transformer un premier champ électrique en un deuxième champ électrique formé d'une somme de N composantes au moins partiellement incohérentes spatialement entre elles, $N \geq 2$, de telle sorte que le contraste de la composante haute fréquence spatiale résultant des interférences de type speckle est réduit par rapport à un contraste initial défini sans module de mise en forme spatiale.

2. Système de génération d'impulsions laser selon la revendication 1, dans lequel ledit module de mise en forme spatiale (230) est agencé en amont dudit système optique (221).

3. Système de génération d'impulsions laser selon l'une quelconque des revendications précédentes, dans lequel ledit module de mise en forme spatiale (230) comprend un brouilleur de polarisation (232), configuré pour transformer un premier champ électrique en un deuxième champ électrique formé d'une somme de deux composantes selon deux axes orthogonaux, les deux composantes présentant un déphasage variable selon un axe donné (y).

4. Système de génération d'impulsions laser selon la revendication 3, dans lequel :

   - ledit déphasage variable selon ledit axe (y) est périodique, résultant en une variation périodique d'un état de polarisation du champ électrique en sortie du brouilleur de polarisation ; et
   - le brouilleur de polarisation (232) est agencé de telle sorte qu'une répartition spatiale d'intensité dudit premier champ électrique comprend, selon ledit axe (y), une dimension supérieure à une période de variation de l'état de polarisation.

5. Système (200) de génération d'impulsions laser selon l'une quelconque des revendications précédentes, dans lequel :

   - la source est multimode longitudinale ; et
   - ledit module de mise en forme spatiale comprend au moins un premier réseau de diffraction (231), configuré pour transformer un premier champ électrique en un deuxième champ électrique formé d'une somme de N composantes, $N \geq 2$, lesdites N composantes étant **caractérisées par** des vecteurs d'onde non colinéaires.

6. Système de génération d'impulsions laser selon la revendication 5, dans lequel N compris entre 2 et 10.

7. Système de génération d'impulsions laser selon l'une quelconque des revendications 5 ou 6, dans lequel ledit module de mise en forme spatiale comprend au moins un deuxième réseau agencé à la suite dudit premier réseau.

8. Système de génération d'impulsions laser selon l'une quelconque des revendications 5 à 7, dans lequel ledit module de mise en forme spatiale comprend en outre un brouilleur de polarisation, ledit au moins un premier réseau étant agencé avant le brouilleur de polarisation.

9. Procédé de génération d'impulsions laser de forte puissance crête comprenant :

   - l'émission d'impulsions laser nanosecondes initiales ($I_L$) au moyen d'une source lumineuse (240) ;
   - la génération, au moyen d'un élément optique diffractif (220) et d'un système optique (221), à partir de chacune desdites impulsions laser initiales, d'une impulsion laser ($I_F$), la répartition spatiale d'intensité de chacune desdites impulsions laser ($I_F$) dans un plan de Fourier du système optique (221) comprenant une composante basse fréquence spatiale de type « top hat » sommée avec une composante haute fréquence spatiale résultant d'interférences de type speckle ;
   - le transport desdites impulsions laser ($I_F$) au moyen d'un dispositif fibré comprenant une fibre multimode (210) avec un coeur unique (212), une face d'entrée de la fibre multimode (210) étant sensiblement confondue avec ledit plan de Fourier du système optique (221);
   - la mise en forme spatiale desdites impulsions laser initiales au moyen d'un module de mise en forme spatiale (230), agencé en amont du dispositif fibré, et configuré pour transformer un premier champ électrique en un deuxième champ électrique formé d'une somme d'une pluralité de N composantes, $N \geq 2$, lesdites N composantes étant au moins partiellement incohérentes spatialement entre elles, de telle sorte que le contraste de la composante haute fréquence spatiale résultant des interférences de type speckle sur la face d'entrée de ladite première fibre multimode est réduit par rapport à un contraste initial défini sans module de mise en forme spatiale.

## Patentansprüche

1. System (200) zur Erzeugung von Laserimpulsen mit hoher Spitzenleistung, aufweisend:

   - eine Lichtquelle (240) zur Emission von anfänglichen Nanosekunden-Laserimpulsen ($I_L$);
   - eine Faservorrichtung für den Transport von Laserimpulsen, die mindestens eine erste Multimodefaser (210) mit einem einzelnen Kern (212) aufweist;
   - ein diffraktives optisches Element (220) und ein optisches System (221), die vor der Faservorrichtung angeordnet und konfiguriert sind, um ausgehend von jedem der anfänglichen Laserimpulse einen Laserimpuls ($I_F$) am Eingang der Faservorrichtung zu erzeugen, wobei die räumliche Intensitätsverteilung jedes der Laserimpulse ($I_F$) auf einer Eingangsseite der ersten Multimodefaser eine räumliche Niederfrequenzkomponente vom Typ "Top Hat" aufweist, die mit einer räumlichen Hochfrequenzkomponente summiert ist, die aus Interferenzen vom Typ Speckle resultiert;
   - ein räumliches Formgebungsmodul (230), das vor der Faservorrichtung angeordnet ist und konfiguriert ist, um ein erstes elektrisches Feld in ein zweites elektrisches Feld zu transformieren, das aus einer Summe von N Komponenten gebildet wird, die zumindest teilweise räumlich inkohärent zueinander sind, $N \geq 2$, so dass der Kontrast der aus den Interferenzen vom Typ Speckle resultierenden räumlichen Hochfrequenzkomponente im Vergleich zu einem ursprünglichen Kontrast, der ohne räumliches Formgebungsmodul definiert ist, reduziert wird.

2. System zur Erzeugung von Laserimpulsen nach Anspruch 1, wobei das räumliche Formungsmodul (230) vor dem optischen System (221) angeordnet ist.

3. System zur Erzeugung von Laserimpulsen nach einem der vorhergehenden Ansprüche, wobei das räumliche Formgebungsmodul (230) einen Polarisationsstörer (232) aufweist, der so konfiguriert ist, dass er ein erstes elektrisches Feld in ein zweites elektrisches Feld transformiert, das aus einer Summe von zwei Komponenten entlang zweier orthogonaler Achsen gebildet wird, wobei die beiden Komponenten eine variable Phasenverschiebung entlang einer gegebenen Achse (y) aufweisen.

4. System zur Erzeugung von Laserimpulsen nach Anspruch 3, wobei:

   - die variable Phasenverschiebung entlang der Achse (y) periodisch ist, was zu einer periodischen Änderung eines Polarisationszustands des elektrischen Feldes am Ausgang des Polarisationsstörers führt; und
   - der Polarisationsstörer (232) so angeordnet ist, dass eine räumliche Intensitätsverteilung des ersten elektrischen Feldes entlang der Achse (y) eine Dimension aufweist, die größer ist als eine Periode der Variation des Polarisationszustandes.

5. System (200) zur Erzeugung von Laserimpulsen nach einem der vorhergehenden Ansprüche, wobei:

- die Quelle ein longitudinaler Multimode ist; und
- das räumliche Formgebungsmodul mindestens ein erstes Beugungsgitter (231) aufweist, das konfiguriert ist, um ein erstes elektrisches Feld in ein zweites elektrisches Feld zu transformieren, das aus einer Summe von N Komponenten, $N \geq 2$, gebildet wird, wobei die N Komponenten durch nicht-kolineare Wellenvektoren gekennzeichnet sind.

6. System zur Erzeugung von Laserimpulsen nach Anspruch 5, wobei N im Bereich von 2 bis 10 liegt.

7. System zur Erzeugung von Laserimpulsen nach einem der Ansprüche 5 oder 6, wobei das räumliche Formgebungsmodul mindestens ein zweites Gitter aufweist, das im Anschluss an das erste Gitter angeordnet ist.

8. System zur Erzeugung von Laserimpulsen nach einem der Ansprüche 5 bis 7, wobei das räumliche Formgebungsmodul zusätzlich einen Polarisationsstörer aufweist, wobei das mindestens eine erste Gitter vor dem Polarisationsstörer angeordnet ist.

9. Verfahren zur Erzeugung von Laserimpulsen mit hoher Spitzenleistung, die folgenden Schritte aufweisend:

- Aussenden von anfänglichen Nanosekunden- Laserimpulsen ($I_L$) mittels einer Lichtquelle (240);
- Erzeugen, mittels eines diffraktiven optischen Elements (220) und eines optischen Systems (221), aus jedem der anfänglichen Laserimpulse einen Laserimpuls ($I_F$), wobei die räumliche Intensitätsverteilung jedes der Laserimpulse ($I_F$) in einer Fourierebene des optischen Systems (221) eine niederfrequente räumliche "Top Hat"-Komponente aufweist, die mit einer hochfrequenten räumlichen Komponente summiert wird, die aus Interferenzen vom Typ Speckle resultiert;
- Transportieren der Laserimpulse ($I_F$) mittels einer Faservorrichtung, die eine Multimodefaser (210) mit einem einzelnen Kern (212) aufweist, wobei eine Eingangsseite der Multimodefaser (210) im Wesentlichen mit der Fourierebene des optischen Systems (221) zusammenfällt;
- räumliches Formen der ursprünglichen Laserimpulse mittels eines räumlichen Formungsmoduls (230), das vor der Faservorrichtung angeordnet und so konfiguriert ist, dass es ein erstes elektrisches Feld in ein zweites elektrisches Feld transformiert, das aus einer Summe einer Vielzahl von N Komponenten gebildet wird, wobei $N \geq 2$, wobei die N Komponenten zumindest teilweise räumlich inkohärent zueinander sind, so dass der Kontrast der räumlichen Hochfrequenzkomponente, der sich aus Interferenz vom Typ Speckle auf der Eingangsseite der ersten Multimodefaser ergibt, im Vergleich zu einem ursprünglichen Kontrast, der ohne ein räumliches Formungsmodul definiert ist, reduziert wird.

**Claims**

1. A system (200) for generating high peak power laser pulses comprising:

- a light source (240) for emitting initial nanosecond laser pulses ($I_L$);
- a fiber-based device for conveying laser pulses, comprising at least one first multimode fiber (210) with a single core (212);
- a diffractive optical element (220) and an optical system (221) both arranged upstream of the fiber-based device, and configured to generate, from each of said initial laser pulses, a laser pulse ($I_F$) at the input of the fiber-based device, wherein the spatial intensity distribution of each of said laser pulses ($I_F$) on an input face of said first multimode fiber comprises a low spatial frequency "top hat" type component summed with a high spatial frequency component resulting from speckle type interference;
- a spatial shaping module (230), arranged upstream of the fiber-based device, configured to transform a first electric field into a second electric field formed by a sum of N components that are at least partially spatially incoherent with one another, $N \geq 2$, such that the contrast of the high spatial frequency component resulting from speckle type interference is limited compared to an initial contrast defined without said spatial shaping module.

2. The laser pulse generation system as claimed in claim 1, wherein said spatial shaping module (230) is arranged upstream of said optical system (221).

3. The laser pulse generation system as claimed in any one of the preceding claims, wherein said spatial shaping module (230) comprises a polarization scrambler (232), configured to transform a first electric field into a second electric field formed by a sum of two components along two orthogonal axes, with the two components having a variable phase shift along a given axis (y).

4. The laser pulse generation system as claimed in claim 3, wherein:

- said variable phase shift along said axis (y) is periodic, resulting in a periodic variation of a polarization state of the electric field at the output of the polarization scrambler; and
- the polarization scrambler (232) is arranged such that a spatial intensity distribution of said first electric field comprises, along said axis (y), a dimension that is greater than a variation period of the polarization state.

5. The laser pulse generation system (200) as claimed in any one of the preceding claims, wherein:

- the source is a longitudinal multimode source; and
- said spatial shaping module comprises at least one first diffraction grating (231), configured to transform a first electric field into a second electric field formed by a sum of N components, $N \geq 2$, wherein said N components are **characterized by** non-collinear wave vectors.

6. The laser pulse generation system as claimed in claim 5, wherein N is comprised between 2 and 10.

7. The laser pulse generation system as claimed in any one of claims 5 or 6, wherein said spatial shaping module comprises at least one second grating arranged downstream said first grating.

8. The laser pulse generation system as claimed in any one of claims 5 to 7, wherein said spatial shaping module further comprises a polarization scrambler, with said at least one first grating being arranged upstream the polarization scrambler.

9. A method for generating high peak power laser pulses comprising:

- emitting initial nanosecond laser pulses ($I_L$) by means of a light source (240);
- generating, by means of a diffractive optical element (220) and of an optical system (221), from each of said initial laser pulses, a laser pulse ($I_F$), wherein the spatial intensity distribution of each of said laser pulses ($I_F$) in a Fourier plane of the optical system (221) comprises a low spatial frequency "top hat" type component summed with a high spatial frequency component resulting from speckle type interference;
- conveying said laser pulses ($I_F$) by means of a fiber-based device comprising a multimode fiber (210) with a single core (212), wherein an input face of the multimode fiber (210) is substantially coincident with said Fourier plane of the optical system (221);
- spatially shaping said initial laser pulses by means of a spatial shaping module (230), arranged upstream of the fiber-based device, and configured to transform a first electric field into a second electric field formed by a sum of a plurality of N components, $N \geq 2$, wherein said N components are at least partially spatially incoherent with one another, such that the contrast of the spatial high frequency component resulting from the speckle type interference on the input face of said first multimode fiber is limited compared to an initial contrast defined without said spatial shaping module.

FIG.1
(ART ANTERIEUR)

EP 4 196 844 B1

FIG.2

EP 4 196 844 B1

FIG.3

FIG.4

FIG.5A

FIG.5B

EP 4 196 844 B1

FIG.6

EP 4 196 844 B1

FIG.7

**EP 4 196 844 B1**

## RÉFÉRENCES CITÉES DANS LA DESCRIPTION

**Documents brevets cités dans la description**

- US 6002102 A
- EP 1528645 A
- US 6818854 B
- WO 2019233899 A
- WO 2019233900 A
- US 9599834 B